# EUROPEAN PATENT APPLICATION

(11) **EP 2 586 668 A2**
(43) Date of publication of application: **01.05.2013**
(21) Application number: 12190127.6
(22) Date of filing: 26.10.2012
(51) Int. Cl.: B60T 1/16, B62D 35/00

(54) **A braking system for a land vehicle with wheels**

(30) Priority: 28.10.2011 GB 201118664
(71) Applicant: Gordon Murray Design Limited, Surrey GU4 8EP (GB)
(72) Inventor: Murray, Ian Gordon, Puttenham, GU3 1BG (GB); Coppuck, Frank, Hook, Hampshire RG27 8RF (GB)
(74) Representative: Downing, Michael Philip

(57) **Abstract**

A braking system for a land vehicle with wheels for reducing the stopping distance under emergency braking comprises one or more braking elements which, when deployed, change the aerodynamic characteristics of the vehicle so as to enhance the frictional force the wheels and the road and/or increases the aerodynamic drag of the vehicle; an actuator for deploying each of the braking elements and a control system for automatically actuating the or each actuator when at least one pre-set condition is met. The braking system preferably comprises two aerodynamic braking elements which, when deployed, increase downforce (or reduce lift), increase drag and distribute the loads on the vehicle tyre contact patches more evenly. The first element is preferably a front air dam which, when deployed, bridges (or almost bridges) the gap between the underside of the front of the vehicle and the road surface. The second element is a rear spoiler which, when deployed, raises the rear, top (trailing edge) of the vehicle roof or rear deck (depending on the vehicle geometry). Either one of these elements can achieve a reduced stopping distance but both elements deployed at the same time achieves improved results. The two elements may be deployed using an electrical, pneumatic or hydraulic actuating system but in a preferred system deployment is effected by the firing of specially shaped airbags which react against the vehicle body. In a further arrangement, the airbags themselves may be to provide the braking elements. The braking elements are deployed under the control of a control system which determines when emergency braking is required.

## Description

### FIELD OF THE INVENTION

The invention relates to a braking system for a land vehicle with wheels.

### BACKGROUND ART

There have been many improvements in automotive vehicle safety in the last 20 years both in the passive and active areas. One of the areas of improvement is vehicle stopping distance. Active systems such as Anti-lock Braking Systems (ABS) and electronic stability programmes (ESP) have combined with advances in tyre technology to reduce stopping distance or impact speeds. One of the latest active systems, is emergency braking assist (EBA) which optimises the braking application and power by sensing when the brake pedal is pressed sharply and then automatically applying the brakes to the maximum extent (which some drivers do not do effectively in an emergency situation).

The present invention provides an additional braking system which seeks to reduce the stopping distance further under emergency braking.

### SUMMARY OF THE INVENTION

According to a first aspect of the invention, there is provided a braking system for a land vehicle with wheels for reducing the stopping distance under emergency braking, the system comprising: one or more braking elements which, when deployed, change the aerodynamic characteristics of the vehicle so as to enhance the frictional force between the wheels and the road and/or increases the aerodynamic drag of the vehicle; an actuator for deploying each of the braking elements and a control system for automatically actuating the or each actuator when at least one pre-set condition is met.

The invention is based on the realisation that, even with all the above active systems fully employed, the limiting factor is the frictional force between the tyre and the road surface. The frictional force F (which is applied parallel to the road surface) is determined by the coefficient of friction µ between the tyre and the road multiplied by the force N applied by the tyre to the road in a direction normal to the road surface. The invention seeks to provide an aerodynamic braking system which increases the force N on the tyre contact patch (without increasing the mass of the vehicle) which will thus result in a greater frictional force F between the tyre and the road and/or increases the aerodynamic drag of the vehicle and hence reduces the stopping distance (or reduces the impact speed). Preferably, the system also helps distribute the braking forces more evenly between all the tyre contact patches which will also assist in reducing the stopping distance and impact speeds.

The braking system preferably comprises two aerodynamic braking elements which, when deployed, increase downforce (or reduce lift), increase drag and distribute the loads on the vehicle tyre contact patches more evenly.

The first element is preferably a front air dam which, when deployed, bridges (or almost bridges) the gap between the underside of the front of the vehicle and the road surface.

The second element is a rear spoiler which, when deployed, raises the rear, top (trailing edge) of the vehicle roof or rear deck (depending on the vehicle geometry).

Either one of these elements can achieve a reduced stopping distance but both elements deployed at the same time achieves improved results.

The two elements may be deployed using an electrical, pneumatic or hydraulic actuating system but in a preferred system deployment is effected by the firing of specially shaped airbags which react against the vehicle body. The firing of airbags in motor vesicles is well known technology - both from a sensor and the explosive device point of view. The main advantage in using airbag technology is the fast deployment times (typically less than 50 milliseconds and preferably less than 35 milliseconds). In a further arrangement, the airbags themselves may be used to provide the braking elements.

The braking elements are deployed under the control of a control system which determines when emergency braking is required. A variety of control systems may be used. In a preferred arrangement, the system senses the distance of an object (such as another vehicle) in front of the vehicle, the speed of the vehicle and the rate at which said distance is decreasing so as to determine if a collision is going to occur and then automatically actuates the actuating mechanism to deploy the braking elements. The control system may also be linked with an EBA system as described above so that when the system senses that the driver is applying emergency braking (usually determined by the rate at which the brake pedal is depressed and/or the pressure in a hydraulic brake line), it also actuates the actuating mechanism to deploy the aerodynamic braking elements as well.

It should be noted that aerodynamic brakes are known on some high performance cars such as the McLaren F.1 and the Mercedes SLR. In the former case, the air brake is only actuated at high speeds (eg above 70 mph), or under driver control, and is designed to alter the aerodynamics of the car to enable the down force on the tyres to be distributed more evenly to provide improved vehicle control when braking at high speed. The Mercedes SLR has a rear spoiler the angle of which changes with vehicle speed (to provide greater down force at speeds above 60 mph) and increases further when the brakes are applied (or under driver control). These systems are primarily designed to improve stability under braking of very high performance cars.

The present invention relates to the use of such technology during emergency braking (ie when a collision is predicted to be likely, the driver takes action which is indicative of an emergency or some other emergency situation is sensed) to reduce the stopping distance of a wide range of vehicles. In the invention, the aerodynamic braking elements are only deployed during emergency braking and are deployed automatically when a control system determines that one or more pre-set conditions are met that indicate that emergency braking is required.

In a preferred from of the invention, the control system determines when a crash is inevitable and then applies maximum braking, including the aerodynamic braking element(s), to minimise the stopping distance or impact speed.

In addition, the combined use of two braking elements as described, ie an air dam at the front of the vehicle and a rear spoiler, provide a significant reduction in stopping distance/collision speed by changing the aerodynamic characteristics of the vehicle.

If desired, the control system may also be set so that the aerodynamic brakes are only applied if the vehicle is travelling at a speed at which they are able to have any useful effect. Such a control system preferably also takes account of the fact that a head wind (which can add to the aerodynamic braking) may lower the vehicle speed at which useful benefit is possible (and the fact that even a small reduction of stopping distance or impact speed can still have worthwhile benefit in reducing injury or death).

A typical scenario for firing the air bags is as follows:
- the vehicle distance and speed sensors determine that a collision is unavoidable
- a signal is sent to both air dam and air spoiler firing mechanisms
- the airbags fire
- the air dam is deployed downwards towards the road and the spoiler is raised from the roof panel to a pre-determined angle.

The vehicle drag is thus increased, the aerodynamic down force acting on the vehicle is increased (or lift reduced) and forces acting on the tyre contact patches (due to a combination of the vehicle weight and the aerodynamic down force) are more evenly distributed. Another advantage is that with reduced lift and more even distribution of the braking forces, the vehicle becomes more controllable. By this means, the collision velocity is reduced (or, possibly, a collision is avoided).

In a further arrangement, the front air dam and a rear spoiler comprise elements which are hinged along their rear edges and can therefore be deployed (at least partially) by the air stream created by the forward motion of the vehicle. The angle of deployment may be limited by a stop or stay.

In this further arrangement, the air dam and air spoiler lie flush with vesicle body surface prior to deployment and are latched in this position. When sensors such as those mentioned above determine that the braking elements need to be deployed, de-latching could be achieved by various methods, for example: electrically or by a pyrotechnic device (such as those used in seat belt or airbag mechanisms). Once de-latched, the braking elements are moved by the airstream to the deployed position.

In some cases, it may be possible to return the braking element to the un-deployed position after use. A light return spring may, for example, be employed to return the elements to their original latched position so the system re-usable in the case of the collision being avoided.

The present invention relates to the use of aerodynamic braking elements which act so as to increase the downforce acting on the car and thus increase the force N acting on one or more of the vehicle ewheels and thus increase the frictional force between the wheel and the road surface. Other forms of emergency braking are known, eg the deployment of parachutes or elements which provide additional engagement with the road but these do not increase the downforce (or reduce the uplift) on the vehicle and do not therefore increase the force N or the frictional force F.

Other preferred and optional features of the invention will be apparent from the following description and from the subsidiary claims of the specification.

### BRIEF DESCRIPTION OF THE DRAWINGS

An embodiment of the present invention will now be described, merely by way of example, with reference to the accompanying figures in which:
Figure 1 illustrates the braking force acting between a vehicle wheel and the road;
Figure 2 is a schematic side view of a vehicle fitted with a braking system according to a first embodiment of the invention;
Figure 3 is a schematic side view of another type of vehicle fitted with a braking system similar to that shown in Figure 1;
Figures 4A and 4B are enlarged views of part of the braking system shown in Figs 1. and 2 shown prior to deployment and after deployment;
Figure 5 is a schematic side view of a vehicle fitted with a braking system according to a first embodiment of the invention; and
Figure 6 is a schematic side view of a vehicle fitted with a braking system according to a third embodiment of the invention.

### DETAILED DESCRIPTION OF THE EMBODIMENTS

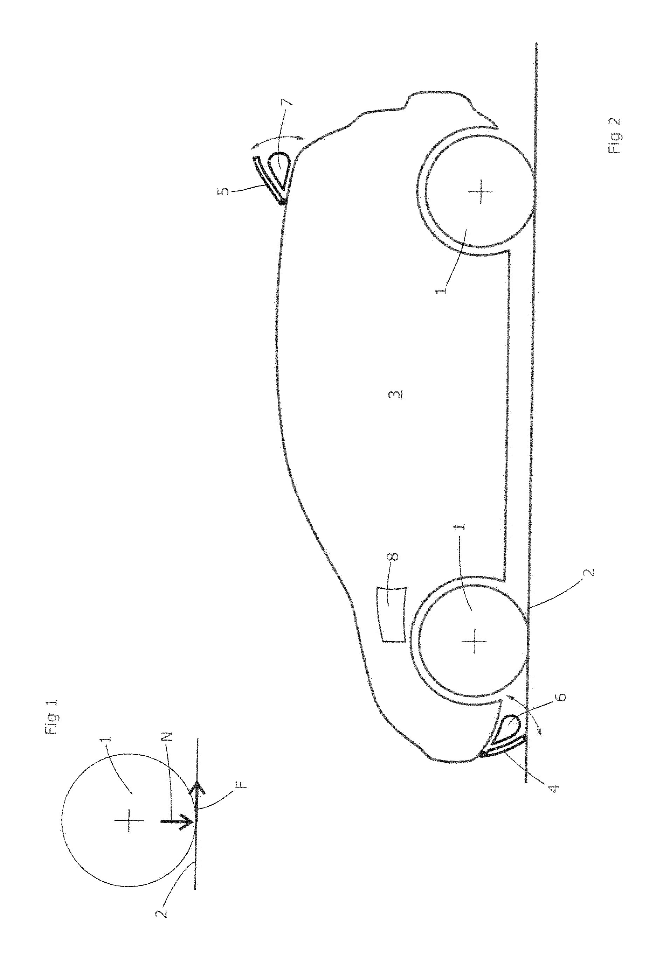

Figure 1 shows a schematic view of a vehicle wheel 1 in contact with a road surface 2 (or other surface). When the vehicle brakes are applied, a braking force F acts on the wheel 1 to slow the vehicle down. The force F acts in a direction parallel to the road surface 2. The force F is determined by the coefficient of friction µ between the wheel 1 and the road surface 2 multiplied by the force N by which the wheel 1 is pressed towards the road surface 2, the force N being normal to the plane of the road surface 2. Thus F = µ x N.

Figure 2 is a schematic side view of a first vehicle 3, such as a hatchback, with two aerodynamic braking elements 4 and 5. The first element comprises a first rigid flap 4 hinged along its front edge provided on the underside of the front of the vehicle 3. When the flap 4 is deployed (as shown in Fig 2), it extends across all or most of the gap between the underside of the vehicle 3 and the road surface 2. It thus acts to reduce the flow of air beneath the vehicle 3 and this reduces the aerodynamic lift provided by this airstream.

The second aerodynamic braking element 5 comprises a second flap 5 hinged along its front edge at or towards the rear of the vehicle roof. When deployed, the flap 5 is raised and projects into the airstream passing over the top of the vehicle. It diverts this airstream which causes a downward aerodynamic force to be applied to the top surface of the vehicle and interacts with the base suction behind the vehicle which reduces aerodynamic lift under the vehicle.

Thus, the first braking element 4 serves to reduce the aerodynamic lift (and so increase the downward force action on the vehicle 3 and particularly the front wheels) and the second braking element 5 causes a downward aerodynamic force to be applied to the vehicle 3 (and particularly to the rear wheels thereof). The frictional force F acting on each of the vehicle wheels is thus increased as the downward forces N acting thereon are increased. This results in a reduction of the stopping distance under emergency braking.

As the aerodynamic braking elements rely upon airflow over the vehicle body, they are most effective at higher speeds, eg at speeds greater than 50 mph (80 kph) such as commonly involved on main roads, dual carriageways and motorways. Experiments indicate that at a speed of 50 mph (80 kph), the combined effect of the two aerodynamic braking elements 4 and 5 results in an appreciable reduction in the stopping distance of the car. The reduction is stopping distance is sufficient for a collision to be avoided in some cases or for the impact speed of the collision to be reduced. This, in turn, will result in less severe injuries to the occupants of the vehicle 3 and, in some cases, will save lives. It is believed that reduction of the stopping distance/collision speed results in the probability of serious injury or death being reduced exponentially.

As indicated above, the flaps 4 and 5 may be deployed by a variety of mechanisms. However, for rapid deployment (preferably within 50 seconds or less), the flaps 4 and 5 are preferably deployed by airbags 6 and 7, or other explosive mechanisms, located behind the flaps 4 and 5. Fig 2 illustrates flaps 4 and 5 deployed by air bags 6 and 7.

Figure 2 also shows schematically a control system 8 (which may be mounted within the engine compartment along with other electronic control systems) for controlling actuation of the braking elements 4 and 5.

The control system may comprise sensors which enable it to predict when a collision is inevitable (or likely) and is arranged to actuate said actuators when such a prediction is made. The sensors may, for example, sense the speed of the vehicle, the distance from a potential collision and the rate at which said distance is reducing

Additional, or alternatively, the control system may comprise sensors to determine when the driver is attempting to initiate an emergency stop and is arranged to actuate said actuators when this is determined. Such a control system may have sensors for sensing the rate of actuation of a brake pedal and/or the pressure within an hydraulic brake line.

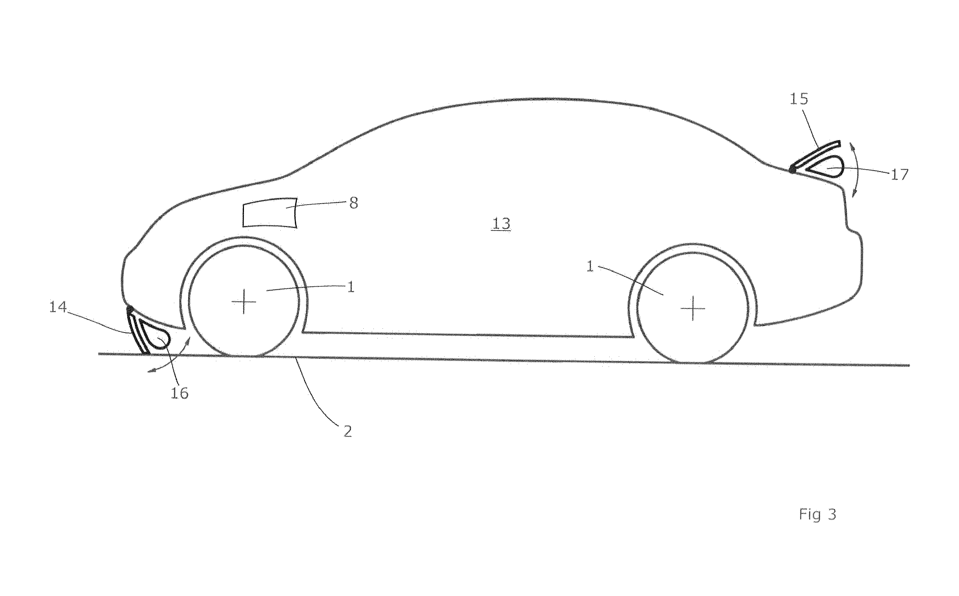

Figure 3 shows another form of vehicle 13, eg a saloon car, fitted with an aerodynamic braking system. This is similar to that described in relation to Fig 2 except that the rear flap 15 is mounted at the rear of the vesicle boot rather than at the rear of the vehicle roof.

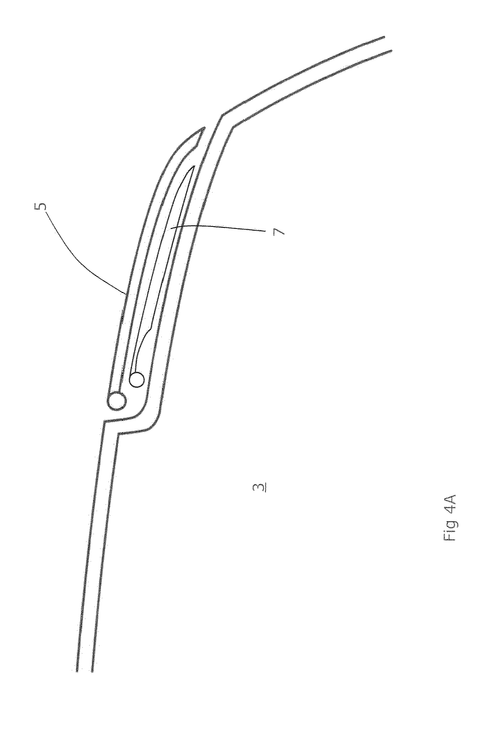

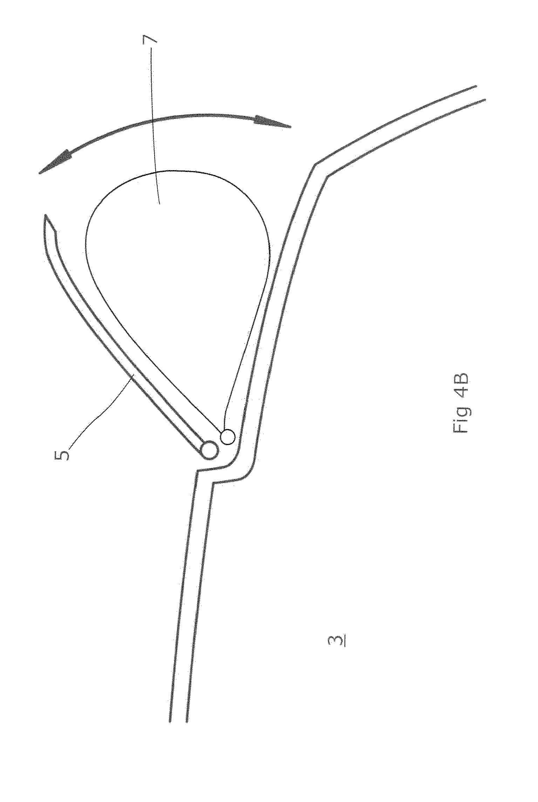

Figures 4A and 4B show enlarged views of the second braking flap 5 and associated air bag 7 shown in Fig 2. In the un-deployed position shown in Fig 4A, the flap 5 lies flush with the vehicle body with the airbag 7 located beneath it. In the deployed position shown in Fig 4B, the air bag 7 has been inflated and pushes the flap 5 upwards about the hinge to that it projects into the air steam passing over the vehicle body.

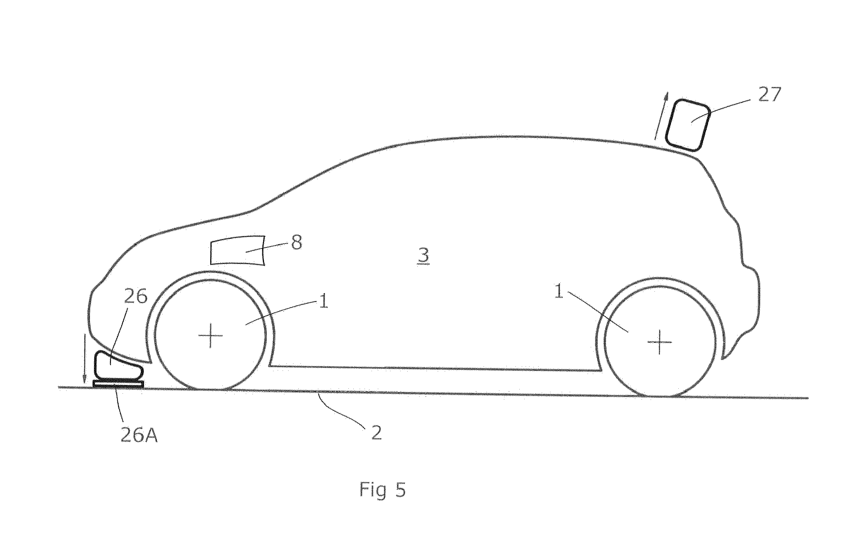

Figure 5 show a modified version of the arrangement shown in Fig 2. In this case, hinged flaps are not used and the airbags 26 and 27 themselves form the aerodynamic braking elements once they have been deployed. Prior to deployment, the air bags 26 and 27 are concealed behind panels which are ejected when the airbags are inflated (as with conventional airbags used within a vehicle). These panels may remain attached to the air bag and may provide a wear surface 26A on the air bag 26 forming the front air dam and a rigid surface (not shown) on one side of the second airbag 27 to provide an aerodynamic element thereof.

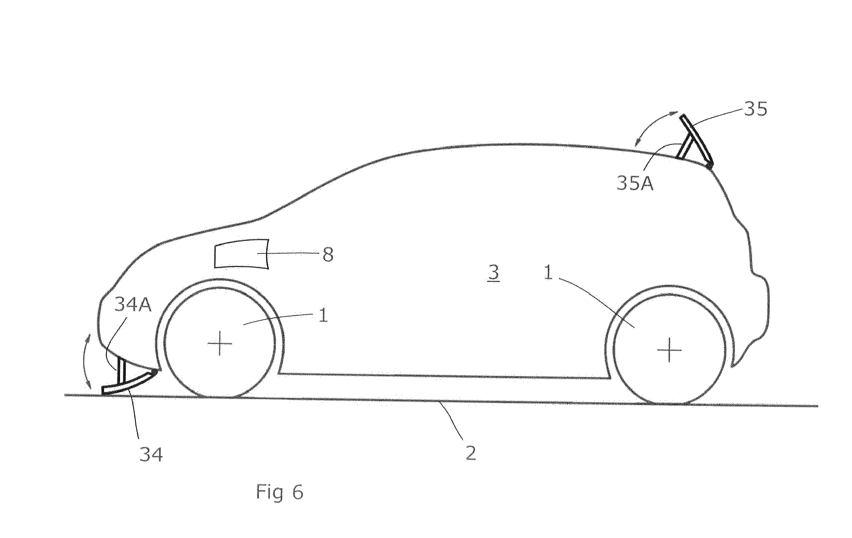

Figure 6 shows another embodiment of the system. In this case, the aerodynamic braking elements 34 and 35 again comprise flaps but they are hinged along their rear edges. The flaps are retained flush with the vehicle body by latching mechanisms 34A and 35A so that, once the latching mechanisms 34A and 35A are released, the air stream passing over them moves the flaps 34 and 35 to a fully deployed position. This has the advantage of being much simpler (and less expensive) than arrangements using airbags. In some cases, it may also be possible to press the flaps 34 and 35 back to an un-deployed position, eg if a collision has been avoided and the vehicle is able to continue with its journey. Obviously, this is more difficult if an airbag is used as, generally, once deployed, these cannot easily be returned to their un-deployed position.

It will be appreciated that the aerodynamic braking systems described above provide a number of advantages:
- they increase the down force acting on one or more wheel by increasing the aerodynamic down force acting on the vehicle (and/or decreasing the aerodynamic uplift acting thereon).
- they provide a more even distribution of the downforce amongst the wheels (and so increase vehicle stability and control)
- they provide aerodynamic drag to add to the braking forces stowing down the vehicle.

As indicated above, the preferred arrangement uses two braking elements, ie a front air dam and a spoiler. However, in some simple embodiments, only one of these may be provided.

Similarly, while preferred arrangements have one or more braking elements that both increase the down force on the vehicle (and/or reduce the uplift) and provide aerodynamic drag, each element may provide only one of these effects, or predominantly one effect and little of the other effect.

It will of course be understood that many variations may be made to the above-described embodiment without departing from the scope of the present invention.

## Claims

1. A braking system for a land vehicle with wheels for reducing the stopping distance under emergency braking, the system comprising: one or more braking elements which, when deployed, change the aerodynamic characteristics of the vehicle so as to enhance the frictional force between the wheels and the road and/or increases the aerodynamic drag of the vehicle; an actuator for deploying each of the braking elements and a control system for automatically actuating the or each actuator when at least one pre-set condition is met.

2. A braking system as claimed in claim 1 in which the one or more braking elements comprises a first flap beneath the front of the vehicle which, in the deployed position, is located in a space between the underside of the vehicle and the road surface so as to provides an air dam that reduces the flow of air beneath the vehicle.

3. A braking system as claimed in claim 1 or 2 in which the one or more braking elements comprise a second flap at the rear of the vehicle roof or boot which, in the deployed position, projects into and diverts the air stream passing over the vehicle.

4. A braking system as claimed in claim 1, 2 or 3, in which the first and/or the second flap are hinged to the vehicle along a front edge of the flap.

5. A braking system as claimed in any preceding claim in which the actuator for deploying the first and/or second flap comprises an air bag.

6. A braking system as claimed in claim 1, 2 or 3, in which the first and/or the second flap are hinged to the vehicle along a rear edge of the flap.

7. A braking system as claimed in claim 6 in which the actuator comprises a latching mechanism for holding the flap in the un-deployed position.

8. A braking system as claimed in claim 7 arranged such that, once the latching mechanism is released, the flap is moved to a deployed position at least partially by the airstream passing over (or beneath) the vehicle.

9. A braking system as claimed in claim 1 in which the one or more braking elements comprises a first air bag which, in the deployed position, is located in a space between the underside of the vehicle and the road surface so as to provides an air dam that reduces the flow of air beneath the vehicle.

10. A braking system as claimed in claim 1 or 9 in which the one or more braking elements comprise a second air bag at the rear of the vehicle roof or boot which, in the deployed position, projects into and disrupts the air stream passing over the vehicle.

11. A braking system as claimed in claim 5 or 9, or any claims dependent therefrom, arranged such that the air bag is inflated within 50 milliseconds of said pre-set condition being met.

12. A braking system as claimed in any preceding claim in which the control system comprises sensors which enable it to predict when a collision is inevitable (or likely) and is arranged to actuate said actuators when such a prediction is made.

13. A braking system as claimed in claim 12 in which the control system comprises sensors for sensing speed of the vehicle, the distance from a potential collision and the rate at which said distance is reducing.

14. A braking system as claimed in any preceding claim in which the control system comprises sensors to determine when the driver is attempting to initiate an emergency stop and is arranged to actuate said actuators when this is determined.

15. A braking system as claimed in claim 14 in which the control system has sensors for sensing the rate of actuation of a brake pedal and/or the pressure within an hydraulic brake line.
